# EUROPEAN PATENT SPECIFICATION

(11) **EP 1 350 093 B1**
(45) Date of publication and mention of the grant of the patent: **16.11.2005**
(21) Application number: 02711200.2
(22) Date of filing: 08.01.2002
(51) Int. Cl.: G01N 27/64

(54) **A METHOD FOR MEASURING THE CONCENTRATION OF IMPURITIES IN HELIUM BY ION MOBILITY SPECTROMETRY**
VERFAHREN ZUR KONZENTRATIONSMESSUNG VON VERUNREINIGUNGEN IN HELIUM DURCH IONENMOBILITÄTS-SPEKTROMETRIE
PROCEDE DE MESURE DE LA CONCENTRATION D'IMPURETES DANS L'HELIUM PAR SPECTROMETRIE DE MOBILITE IONIQUE

(30) Priority: 08.01.2001 IT MI20010018
(43) Date of publication of application: 08.10.2003
(73) Proprietor: SAES GETTERS S.p.A., 20020 Lainate (Milano) (IT)
(72) Inventor: PUSTERLA, Luca, I-20129 Milano (IT); SUCCI, Marco, I-20131 Milano (IT); BONUCCI, Antonio, I - 20151 Milano (IT); STIMAC, Robert, Palm Beach Gardens, FL 33418 (US)
(74) Representative: Adorno, Silvano
(86) International application number: PCT/IT2002/000004
(87) International publication number: WO 2002/054058

(56) References cited:
- EP-A- 1 154 268
- WO-A-00/52432
- US-A- 5 457 316
- US-A- 5 541 519

## Description

The present invention relates to a method for measuring the concentration of impurities in helium by means of ion mobility spectrometry.

Helium is widely used as reaction medium or as transport gas in the integrated circuits industry. As known, in the production of these devices the purity of all the reagents used is fundamentally important; as a matter of fact, contaminants possibly present in the reagents or in the reaction environment can be incorporated in the solid state devices, thus altering the electrical properties thereof and giving rise to production wastes. The specifications on the purity of the gases employed in production can vary from one manufacturer to another, and depending on the particular process employed. Generally, a gas is considered to be acceptable for the production when its content in impurities is lower than 10 ppb (parts per billion); preferably, the content in impurities is lower than 1 ppb. As a result, it is important to be able to measure extremely low concentrations of impurities in the gases in a precise and reproducible way.

A technique that can be used for this purpose is ion mobility spectrometry, known in the field with the abbreviation IMS; the same abbreviation is used also for the instrument with which the technique is carried out, indicating in this case "Ion Mobility Spectrometer". The interest for this technique derives from its very high sensitivity, associated with limited size and cost of the instrument; by operating in appropriate conditions it is possible to sense species in the gas or vapor phase in a gas medium in quantities of the order of the picograms (pg, that is 10⁻¹² grams), or in concentrations of the order of parts per trillion (ppt, equivalents to a molecule of analyzed substance every 10¹² gas molecules of the sample). IMS instruments and methods of analysis in which they are employed are described, for example, in patents USA 5,457,316 and 5,955,886 in the name of US company PCP Inc.

An IMS instrument is essentially formed of a reaction zone, a separation zone and a collector of charged particles.

In the reaction zone takes place the ionization of the sample comprising the gases or vapors to be analyzed in a transport gas, commonly by means of beta-radiations emitted by ⁶³Ni. The ionization takes place mainly on the transport gases with formation of the so-called "reagent ions", whose charge is then distributed on the present species as a function of their electronic or proton affinities or of their ionization potentials.

The reaction zone is divided from that of separation by a grid that, when kept at a suitable potential, prevents the ions produced in the reaction zone from entering into the separation zone. The moment when the grid potential is annulled, thus allowing the ions to enter into the separation zone, is the "time zero" of the analysis.

The separation zone comprises a series of electrodes which create an electric field such that the ions are carried from the reaction zone towards a collector. In this zone, which is kept at atmospheric pressure, a gas flow having opposite direction with respect to that of the ions movement is present. Commonly the counterflow gas (defined in the field as "drift gas") is an extremely pure gas, corresponding to the gas whose content of impurities has to be determined. The velocity of motion of the ions depends on the electric field and on the cross-section of the same ions in the gaseous medium, so that different ions take different times for crossing the separation zone and reaching the particles collector. The time passed from the time zero to the time of arrival on the particles collector is called "time of flight". The collector is connected to the signal processing system, which transforms the current values sensed as a function of time in the final graph wherein peaks corresponding to the various ions as a function of the time of flight are shown; from the determination of this time, knowing the test conditions it is possible to determine the presence of the substances which are object of the analysis, whereas from the peak areas with suitable computation algorithms it is possible to calculate the concentration of the corresponding species.

In spite of its conceptual simplicity, the application of the technique involves considerable difficulties in the interpretation of the analysis results. This is due firstly to the fact that the net charge distribution among the various present species is the result of equilibria which depend on various factors, with the result that the peaks corresponding to one impurity can be modified in intensity, or even disappear, depending on the presence of other impurities. The book "Ion Mobility Spectrometry" by G. A. Eiceman and Z. Karpas, published in 1994 by CRC Press, can be referred to for an illustration of the (rather complex) charge transfer principles which are the base of the technique. Further, with equal chemical composition of the gas, the result depends on the analysis parameters, such as the electric field applied in the separation zone, the flow rate of the gas which has to be analyzed and the flow rate of the drift gas.

As a consequence of these phenomena, the shape of the graph resulting from an IMS analysis is strongly dependent on the analysis conditions. The computation algorithms used for interpreting the analysis results are based on the deconvolution of the complete graph and on the relative measure of the areas of all the present peaks. The best results are obtained when each present ionic species gives rise to a separate peak in the graph. The analysis is still possible, although with greater difficulties, when some peaks are superimposed; in these cases it is necessary to resort to hypotheses of repartition of the peak areas among the different species, with the risk anyway of introducing errors in the analysis. Finally, the IMS analysis (also the qualitative one) is impossible when large superimpositions between peaks corresponding to different species are present

Because of the complexity of the phenomena into play, there is no standard method for applying the IMS technique, and each analysis has to be studied separately in order to define the conditions which allow to obtain a good separation of all the peaks corresponding to the different species which can be present in the gas under analysis.

Object of the present invention is to provide a method for measuring the concentration of impurities in helium by means of ion mobility spectrometry.

This object is obtained according to the present invention by means of a method which consists in carrying out the analysis in one of the following conditions:
- employing as the sample gas a helium-argon mixture formed of the helium whose content of impurities has to be determined and pure argon, said mixture containing from 0.1 to 50% of argon, and pure helium as the counterflow gas in the separation zone of the ion mobility spectrometer; or
- employing as the sample gas the helium whose impurities content has to be determined or a mixture thereof with pure argon, said mixture containing from 0.1 to 50% of argon, and pure argon as the counterflow gas in the separation zone of the ion mobility spectrometer; or
- employing as the sample gas a mixture between the helium whose content of impurities has to be determined and pure argon and as the counterflow gas a helium-argon mixture containing no impurities, wherein said mixtures have an argon concentration included between 10 and 80%.

The invention will be described in the following with reference to the figures, wherein:
- figure 1 schematically shows a possible system for forming helium-argon mixtures suitable for the analysis according to the invention;
- figures 2 to 6 show the results of IMS analyses carried out according to the invention and of analyses carried out in conditions which are not according to the invention.

The standard way to carry out an IMS analysis requires the use, as the drift gas, of the same gas (obviously pure) as the main gas in the sample whose impurity content has to be determined.

On the contrary, the inventors have found that, in the case of the analysis of impurities in helium, only operating according to one of the above mentioned conditions allows to obtain graphs wherein the peaks corresponding to the various impurities are sufficiently separated, thus allowing a reliable quantitative analysis as previously discussed.

Obviously, in all the conditions of analysis according to the invention, the only impure gas used is helium whose content of impurities has to be determined, whereas all the other gases (the argon of the sample gas or the drift gas) must be pure, in order not to introduce impurities which would modify the result of the analysis.

The first possibility of operation according to the invention consists in using pure helium as drift gas and, as sample gas, a mixture between argon and the helium whose content of impurities has to be determined, said mixture containing from 0.1 to 50% of argon.

In this condition the effect of argon, which is present as minor component of the sample mixture, is essentially to improve the ionization processes, thus allowing the formation and the detection of the peaks corresponding to the impurities.

When operating according to this first condition, the ratio between the flow of the sample gas and the drift gas is not binding and can be anything, as long as the extreme is not reached of an excessive dilution of the sample gas which would reduce the sensibility of the method of analysis.

In the second operative condition according to the invention, the helium whose content in impurities has to be determined or a mixture thereof with argon is used as sample gas and pure argon is used as drift gas. Also in this case the possible sample mixture contains from 0.1 to 50% of argon.

By operating according to this second way, it is preferable that the flow rate of the drift gas (also indicated in the following as F_{d}) is at least ten times higher than the flow rate of the sample gas (also indicated in the following as F_{c}); even more preferably, the ratio F_{d}/F_{c} is included between about 15 and 20. By operating with values of the ratio F_{d}/F_{c} lower than 10, a poor separation of the peaks corresponding to the impurities is obtained, whereas by operating with too high values of said ratio, for example higher than 20, an excessive dilution of the sample occurs, to the detriment of the analysis sensibility.

Finally, according to the last operative condition of the invention, the sample gas and the drift gas are two helium-argon mixtures having an argon concentration comprised between 10 and 80%: at lower values the separation of the peaks corresponding to the various species is not sufficient for the purposes of the quantitative analysis, whereas at higher values the quantity of helium in the sample gas is excessively reduced and a poor sensibility of the analysis results. Inside this range, the best results are obtained with argon concentrations comprised between about 30 and 40% of the mixtures.

In this case the ratio between the flow rates of sample gas and drift gas is not relevant for the results, and is generally maintained at values of about 1:2.

The helium/argon mixtures used in this operative condition can be prepared by mixing pure argon to the helium which has to be analyzed (in the case of the sample gas) or to pure helium (in the case of the drift gas) by means of any mixing system; for example, it is possible to employ calibration systems based on the use of mass flowmeters, or systems comprising narrowings having a calibrated and known gas conductance, like the system described in Italian patent application MI2000A-002708 in the name of the Applicant. The mixture to be employed as drift gas can also be found on the market from the companies which sell the pure gases. The sample mixture and the one to be employed as drift gas do not need to have the same argon concentration; this can however be a preferred condition because it requires a lower number of controls on the system for mixing the gas flows.

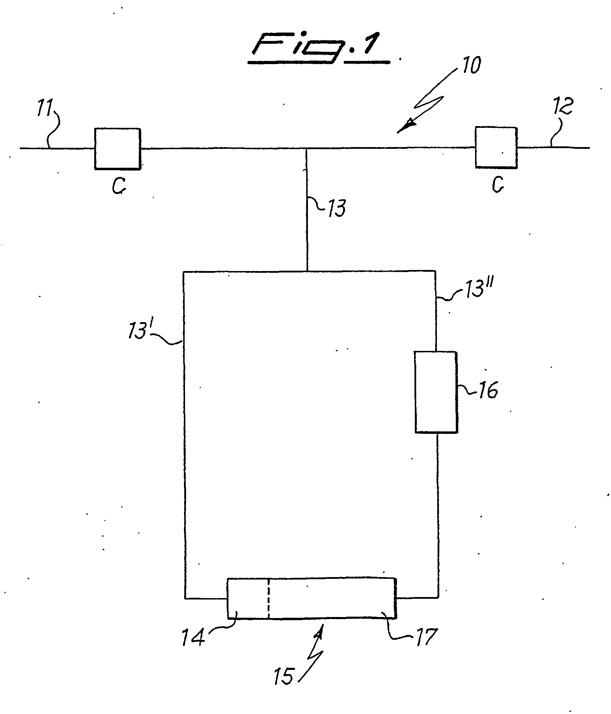

It is also possible that sample gas and drift gas are formed starting from the same mixture. For carrying out this embodiment it is possible to employ the system schematized in figure 1. In said system, 10, a helium flow containing impurities coming from a line 11 is mixed with a flow of pure argon coming from a line 12; the desired mixing ratio (for example, He:Ar = 50:50) is obtained by means of flow rate control elements which are generally indicated as C. The mixture is formed in line 13, which is subsequently divided in two secondary lines 13' and 13". The portion of mixture of line 13' (containing the impurities initially present in the helium) is sent without further treatments to the reaction zone 14 of an IMS instrument 15. The portion of mixture of line 13" is sent to a purification system 16, which removes all the impurities present in the mixture, and subsequently to the separation zone 17 of instrument 15, forming the drift gas of the analysis.

The purification system may be formed of one or more purifiers in series. The purifiers can be for example of the kind comprising getter alloys, generally based on zirconium or titanium, kept at temperatures comprised between about 250 and 500 °C; purifiers which employ getter alloys are object of various patent publications, among which for example US patents US-A-4,942,019, US-A-5,080,875, US-A-5,182,089, US-A-5,238,469, US-A-5,492,682, US-A-5,556,603, US-A-5,558,844, US-A-5,968,468 and US-A-6,086,685 and in European patents EP-B-470,936, EP-B-484,301 and EP-B-493,347. Alternatively, purifiers working at ambient temperature can be used, such as the purifiers based on nickel generally dispersed on highly porous supports like zeolites or alumina, which are able to sorb a wide range of gases, in particular water, oxygen, carbon monoxide and dioxide and hydrogen. The purifiers based on nickel are preferably used in combination with catalytic materials for the conversion of some gases in species which can be more easily sorbed; for example, it is possible to use a bed of palladium oxide kept at a temperature comprised between about 200 and 400 °C, which is able to convert methane into carbon dioxide and water, which are then sorbed by the supported nickel metal. It is then possible to use purifiers specific for some kind of gases, such as for example the purifier for removing oxygenated species from ammonia described in patent US-A-5,716,588, or the purifier selective for water described in patent application EP-A-960,647; these specific purifiers are generally employed in combination with a purifier which is able to remove several gases, of the previously described types. Finally, the purifiers described up to now may be used in combination with purifiers comprising other materials capable of physically sorbing gases at room temperature, such as for example molecular sieves, which can remove part of the water or some hydrocarbons, thus prolonging the life of the principal purifier.

The invention will be further illustrated by the following examples.

The test results are given in graphs wherein peaks are present as a function of the time of flight of the corresponding ions in milliseconds (ms); the peaks have an area corresponding to the concentration of the different ions. These ions are generally complex species, which may comprise one or more molecules of the ionized gas, possibly associated to more neutral molecules of the transport gas: for the sake of simplicity, the main peaks in the figures are identified with the formula of the molecular species to which they are ascribed instead than with the formula of the actually corresponding complex ion. The peak intensity is given in volts (V); the transformation of the current directly measured by the detector (number of ions which collide on the collector in the unit of time) into volts is operated by the instrument electronics. The ionization of the sample is carried out by a radioactive source of ⁶³Ni. The separation zone of the employed instrument is 8 cm long; in all the tests the electric field applied is equal to 128 V/cm.

### EXAMPLE 1

This example is representative of the first condition of analysis of the invention.

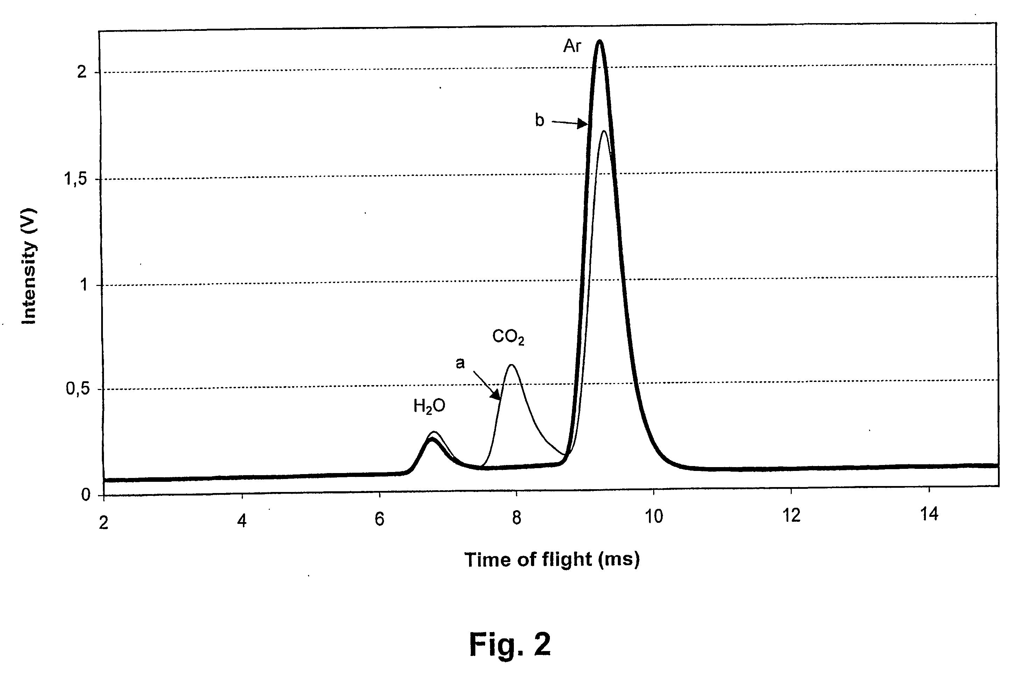

An IMS analysis is carried out on a helium-argon mixture containing 5% of argon to which, with a calibration system based on the use of mass flowmeters, 4 ppb of carbon dioxide (CO₂) are added. The test is carried out at 80 °C by using pure helium as the drift gas; the ratio between the flow rate of the sample gas and that of the drift gas is equal to 1. The test results are given in graph in figure 2 as curve a (thinnest line in the figure). As a comparison, in the figure are also given the results of an analysis carried out in the same conditions, but using as the sample an argon-helium mixture to which no CO₂ has been added (curve b, thickest line).

### EXAMPLE 2

This example is representative of the second condition of analysis of the invention.

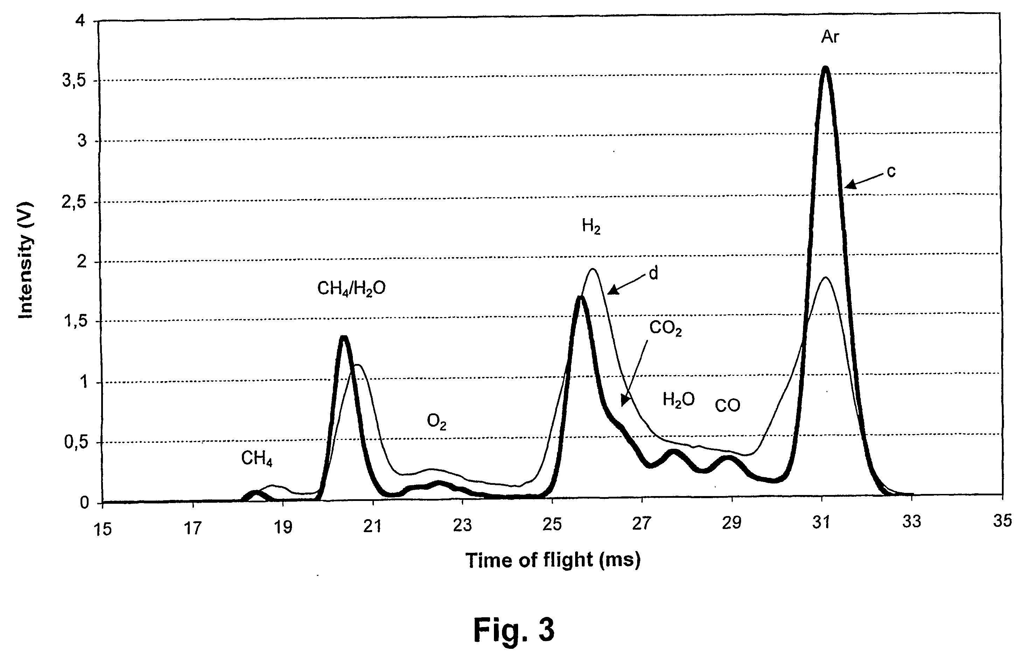

An IMS analysis is carried out on helium containing CO₂, carbon monoxide (CO), oxygen (O₂) and methane (CH₄) as intentionally added impurities, and about 2 ppb of hydrogen (H₂) and 2 ppb of water (H₂O) as "background" impurities of the system, which are hardly eliminable. The test is carried out at 80 °C using pure argon as the drift gas; the flow rate of the sample gas is equal to 0.25 1/min, and that of the drift gas is equal to 4 1/min, with a ratio F_{d}/F_{c} of 16. The test results are given in graph in figure 3 as curve c (thickest line in the figure).

### EXAMPLE 3

The test of example 2 is repeated, but operating with a flow rate of drift gas of 2 1/min and a ratio of F_{d}/F_{c} of 8. The result of the test is given in figure 3 as curve **d** (thinnest line in the figure).

### EXAMPLE 4

This example is representative of the second condition of analysis according to the invention.

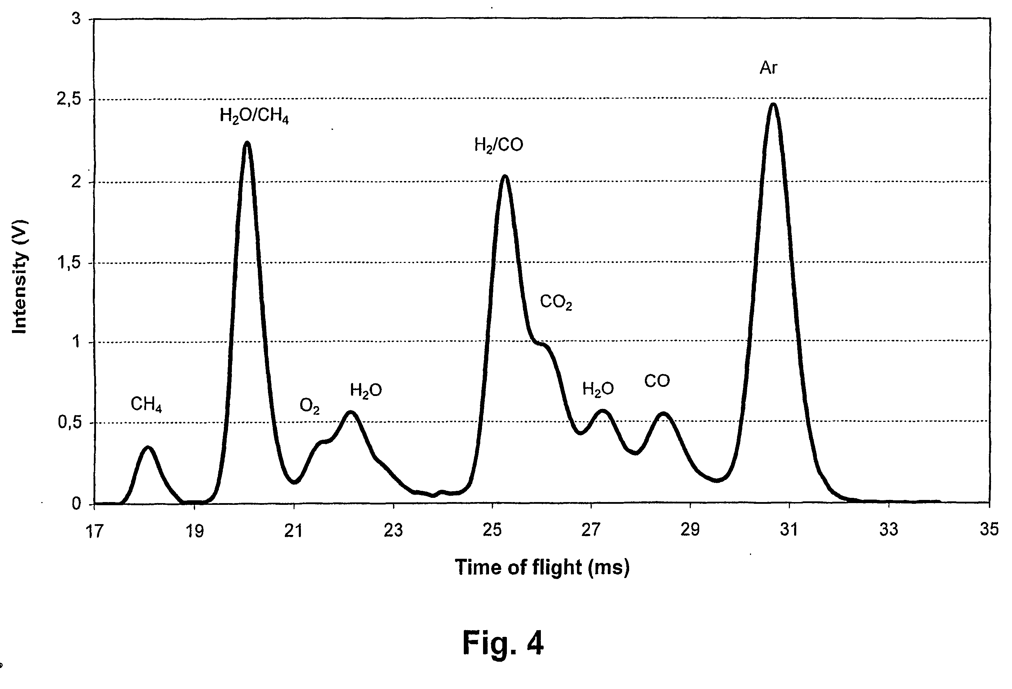

An IMS analysis is carried out using as sample gas an helium-argon mixture containing 5% of argon, and containing CO, CO₂, O₂ and CH₄ as impurities intentionally added, and H₂ and H₂O as "background" impurities. The test is carried out at 80 °C using pure argon as drift gas; the flow rate of sample gas is equal to 0.25 1/min, and that of drift gas is 4 1/min, with a ratio F_{d}/F_{c} of 16. The test results are given in a graph in figure 4.

### EXAMPLE 5

This example is representative of the third analysis condition of the invention.

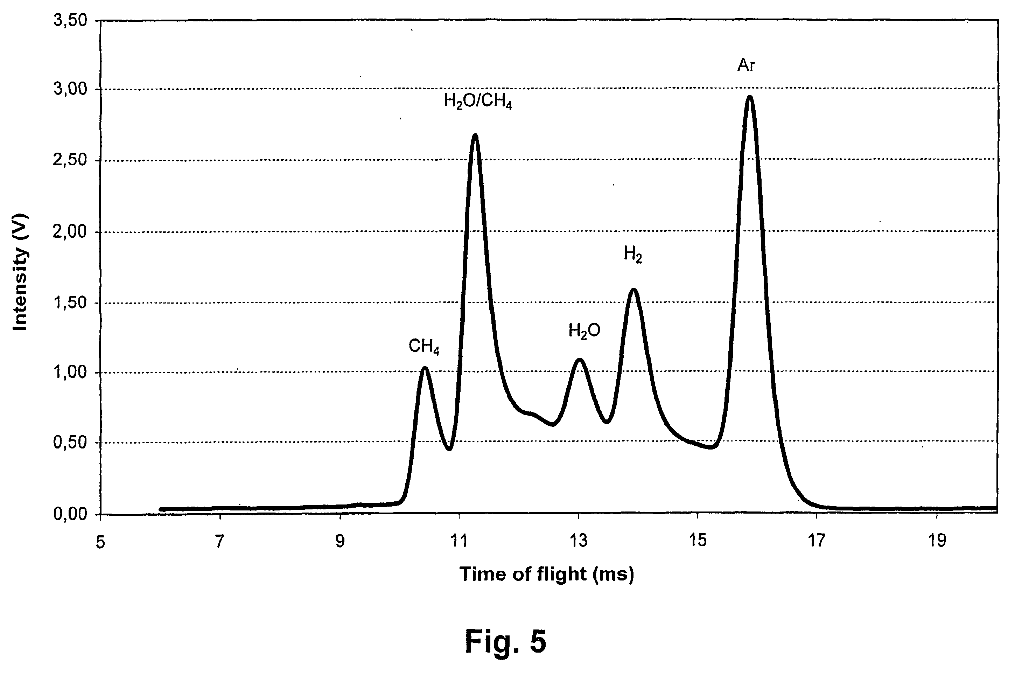

By using a system of gas lines of the type shown in figure 1 comprising a nickel-based purifier, two helium-argon mixtures containing 32% of argon are formed. The mixture coming from the line comprising the purifier is employed as drift gas, whereas the other, containing CH₄ as intentionally added impurity and H₂O and H₂ as "background" impurities originally present in the helium, represents the sample gas. The ratio F_{d}/F_{c} is 1. The test results are given in graph in figure 5.

### EXAMPLE 6 (COMPARATIVE)

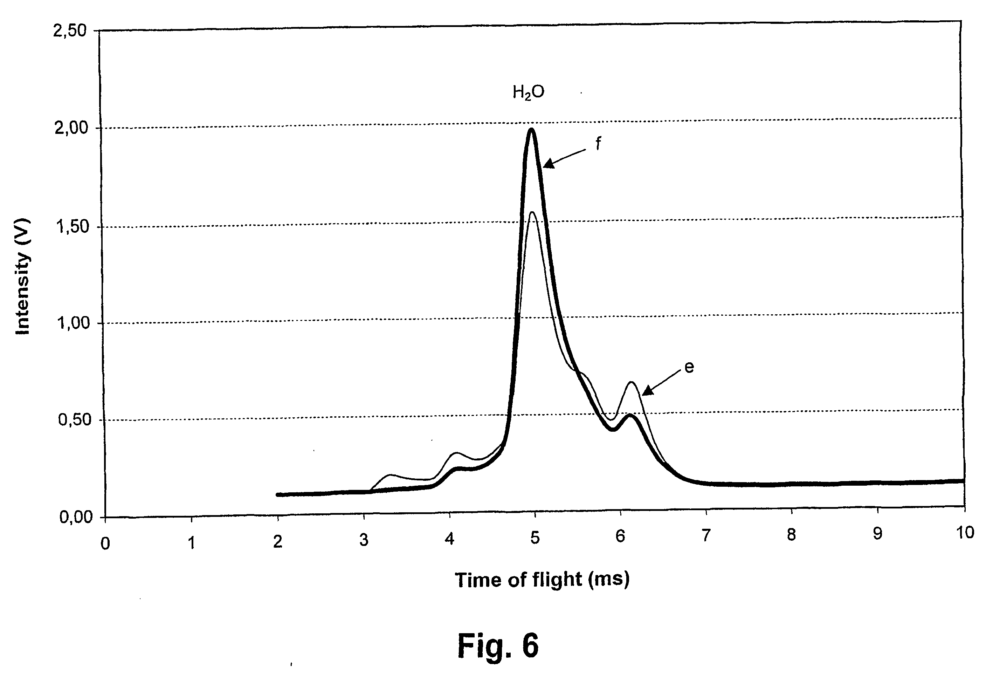

An IMS test is carried out using as sample gas helium containing as impurities about 2 ppb of H₂O which represent a hardly eliminable base of the system, and 5 ppb of intentionally added H₂, and pure helium as drift gas. The test is carried out at 80 °C, with a ratio F_{d}/F_{c} of 1. The test results are given in graph in figure 6 as curve e (thin curve). The test is then repeated without adding hydrogen (thicker curve, f, in figure 6).

As it can be noted from the test results, by operating in the various conditions of the invention, it is possible to obtain as a result of IMS analyses graphs wherein the peaks of the different impurities are sufficiently separated; these graphs are thus suitable for allowing the estimation of the areas and therefore the quantitative analysis.

In particular, it can be noted that operating according to the first of the conditions of the invention (example 1 and figure 2), in the case of the presence of the impurity CO₂, this appears as a well defined and recognizable peak.

By operating according to the second condition of the invention (examples 2-4, figures 3 and 4) it is possible to obtain the separation of the peaks of a number of impurities; in particular, when only helium is used as sample gas, the best results are obtained with higher ratios between the flow rate of drift gas and sample gas (comparison between curves c and d in figure 3).

Finally, also operating according to the third of the conditions of the invention (helium-argon mixtures for sample gas and drift gas) good results are obtained in terms of separation of the peaks which can be ascribed to the different present impurities.

On the contrary, using conditions which are not according to the invention (sample gas formed of helium with impurities and pure helium as drift gas) in the case that the impurity is hydrogen a spectrum which is hard to be interpreted is obtained, formed of several peaks which can be difficult to ascribe, so that the calculation of the areas to be assigned to the various species and consequently the quantitative analysis become practically impossible.

## Claims

1. A method for measuring the concentration of impurities in helium by means of ion mobility spectrometry consisting in carrying out the analysis in one of the following conditions:
- employing as the sample gas a helium-argon mixture formed of the helium whose content of impurities has to be determined and pure argon, said mixture containing from 0.1 to 50% of argon, and pure helium as the counterflow gas in the separation zone of the ion mobility spectrometer; or
- employing as the sample gas the helium whose content of impurities has to be determined or a mixture thereof with pure argon, said mixture containing from 0.1 to 50% of argon, and pure argon as the counterflow gas in the separation zone of the ion mobility spectrometer; or
- employing as the sample gas a mixture between the helium whose content of impurities has to be determined and pure argon and as the counterflow gas a helium-argon mixture containing no impurities, wherein said mixtures have an argon concentration comprised between 10 and 80%.

2. A method according to claim 1 wherein, when helium or a mixture thereof is used as sample gas and pure argon as counterflow gas, the ratio between the flow rate of the counterflow gas and that of the sample gas is equal or higher than 10.

3. A method according to claim 2, wherein said ratio is comprised between 15 and 20.

4. A method according to claim 1 wherein, when two helium-argon mixtures are used as sample gas and as counterflow gas, said mixtures have an argon concentration comprised between 30 and 40%.

5. A method according to claim 1 wherein, when two helium-argon mixtures are used as sample gas and as counterflow gas, said mixtures have the same argon concentration.

6. A method according to claim 5 wherein said mixtures are obtained by using a system (10) wherein the flow of helium containing impurities coming from a line (11) and a flow of pure argon coming from a line (12) are mixed in a line (13), by checking the mixing ratio by means of flow rate control elements (C); by subsequently dividing the so obtained mixture into two portions conveyed into two secondary lines (13', 13"); by conveying the portion of gas in the first of said secondary lines (13') without further treatments to the reaction zone (14) of an IMS instrument (15); and conveying the portion of gas in the second of said secondary lines (13") to a purification system (16) which removes all the impurities present in this portion of mixture, and subsequently as counterflow gas to the separation zone (17) of the IMS instrument (15).

7. A method according to claim 6 wherein said purification system (16) comprises a purifier containing getter alloys based on zirconium or titanium.

8. A method according to claim 6 wherein said purification system (16) comprises a purifier based on nickel.

9. A method according to claim 8 wherein said purification system (16) further comprises a catalytic bed of palladium oxide.

## Patentansprüche

1. Verfahren zum Messen der Konzentration von Verunreinigungen in Helium über Ionenmobilitätsspektrometrie, in dem die Analyse unter einer der folgenden Bedingungen durchgeführt wird:
- Verwendung eines Helium-Argon-Gemisches als Probegas, das aus dem Helium gebildet ist, dessen Gehalt an Verunreinigungen bestimmt werden soll und aus reinem Argon, wobei das Gemisch 0,1 bis 50 % Argon enthält und reinem Helium als Gegenstromgas in der Separationszone des Ionenmobilitätsspektrometers; oder
- Verwendung des Heliums als Probegas, dessen Gehalt an Verunreinigungen bestimmt werden soll oder eines Gemisches hiervon mit reinem Argon, wobei dieses Gemisch 0,1 bis 50 % Argon enthält und reinem Argon als Gegenstromgas in der Separationszone des Ionenmobilitätsspektrometers; oder
- Verwendung eines Gemisches aus dem Helium, dessen Gehalt an Verunreinigungen bestimmt werden soll, und reinem Argon als Probegas und eines Helium-Argon-Gemisches als Gegenstromgas, das keine Verunreinigungen enthält, wobei diese Gemische eine Argonkonzentration zwischen 10 und 80 % aufweisen.

2. Verfahren nach Anspruch 1, worin, wenn Helium oder ein Heliumgemisch als Probegas verwendet wird und reines Argon als Gegenstromgas, das Verhältnis aus der Strömungsrate des Gegenstromgases und der des Probegases gleich oder größer als 10 ist.

3. Verfahren nach Anspruch 2, worin dieses Verhältnis zwischen 15 und 20 liegt.

4. Verfahren nach Anspruch 1, worin, wenn zwei Helium-Argon-Gemische als Probegas und als Gegenstromgas verwendet werden, diese Gemische eine Argonkonzentration zwischen 30 und 40 % aufweisen.

5. Verfahren nach Anspruch 1, worin, wenn zwei Helium-Argon-Gemische als Probegas und als Gegenstromgas verwendet werden, diese die gleiche Argonkonzentration aufweisen.

6. Verfahren nach Anspruch 5, worin diese Gemische über die Verwendung eines Systems (10) erhalten werden, worin der Strom des Heliums, das die Verunreinigungen enthält und das von einer Leitung (11) kommt und ein Strom reines Argon, das von einer Leitung (12) kommt, in einer Leitung (13) vermischt werden, über Überprüfen des Vermischungsverhältnisses mittels eines Strömungsverhältniskontrollelements (C); über anschließendes Trennen des so erhaltenen Gemisches in zwei Teile, die in zwei sekundären Leitungen (13', 13") befördert werden; über Befördern des Teiles des Gases in der ersten dieser sekundären Leitungen (13') ohne weitere Behandlungen zu der Reaktionszone (14) eines IMS-Instruments (15); und Befördern des Teiles des Gases in der zweiten der sekundären Leitungen (13") zu einem Reinigungssystem (16), das alle Verunreinigungen, die in diesem Teil des Gemisches vorhanden sind, entfernt, und anschließend als Gegenstromgas zu der Trennzone (17) des IMS-Instruments (15).

7. Verfahren nach Anspruch 6, worin das Reinigungssystem (16) einen Reiniger umfasst, der Getterlegierungen auf Basis von Zirkon oder Titan enthält.

8. Verfahren nach Anspruch 6, worin das Reinigungssystem (16) einen Reiniger auf Nickelbasis umfasst.

9. Verfahren nach Anspruch 8, worin das Reinigungssystem (16) weiter ein Katalysatorbett aus Palladiumoxid umfasst.

## Revendications

1. Méthode pour mesurer la concentration d'impuretés dans l'hélium au moyen de la spectrométrie de mobilité d'ions consistant à mettre en oeuvre l'analyse dans une des conditions suivantes :
- employer comme gaz échantillon, un mélange hélium-argon, formé de l'hélium dont le contenu d'impuretés doit être déterminé et d'argon pur, ledit mélange contenant de 0,1 à 50% en argon, et de l'hélium pur comme gaz à contre-courant dans la zone de séparation du spectromètre de mobilité d'ions ; ou
- employer en tant que gaz échantillon, l'hélium dont le contenu d'impuretés doit être déterminé ou un mélange de celui-ci avec de l'argon pur, ledit mélange contenant de 0,1 à 50% d'argon, et de l'argon pur comme gaz à contre-courant dans la zone de séparation du spectromètre de mobilité d'ions ; ou
- employer comme gaz échantillon, un mélange entre l'hélium dont le contenu d'impuretés doit être déterminé et de l'argon pur, et comme gaz à contre-courant un mélange hélium-argon dépourvu d'impuretés, dans lequel lesdits mélanges ont une concentration en argon comprise entre 10 et 80%.

2. Méthode selon la revendication 1, dans laquelle, lorsque l'hélium ou un mélange de celui-ci est utilisé comme gaz échantillon, et l'argon pur comme gaz à contre-courant, le rapport entre le débit d'écoulement du gaz à contre-courant et celui du gaz échantillon est égal ou supérieur à 10.

3. Méthode selon la revendication 2, dans laquelle ce rapport est compris entre 15 et 20.

4. Méthode selon la revendication 1, dans laquelle, lorsque deux mélanges hélium-argon sont utilisés comme gaz échantillon et comme gaz à contre-courant, lesdits mélanges ont une concentration en argon comprise entre 30 et 40%.

5. Méthode selon la revendication 1, dans laquelle, lorsque deux mélanges hélium-argon sont utilisés comme gaz échantillon et comme gaz à contre-courant, lesdits mélanges ont la même concentration en argon.

6. Méthode selon la revendication 5, dans laquelle lesdits mélanges sont obtenus en utilisant un système (10) dans lequel le débit de l'hélium contenant les impuretés venant d'une ligne (11) et le débit d'argon pur venant d'une ligne (12) sont mélangés dans une ligne (13), en vérifiant le rapport du mélange au moyen d'éléments de contrôle du débit d'écoulement (C), en divisant ensuite le mélange ainsi obtenu en deux portions transportées à l'intérieur de deux lignes secondaires (13', 13") ; en transportant la portion de gaz dans la première de ces deux lignes secondaires (13') sans autre traitement vers la zone de réaction (14) d'un instrument IMS (15) ; en transportant la portion de gaz dans la seconde de ces lignes secondaires (13") vers un système de purification (16) qui élimine toutes les impuretés présentes dans cette portion du mélange, et ensuite comme gaz à contre-courant vers la zone de séparation (17) de l'instrument IMS (15).

7. Méthode selon la revendication 6, dans laquelle ledit système de purification (16) comprend un épurateur contenant des alliages getter à base de zirconium et de titane.

8. Méthode selon la revendication 6, dans laquelle ledit système de purification (16) comprend un épurateur à base de nickel.

9. Méthode selon la revendication 8, dans laquelle ledit système de purification (16) comprend en outre un lit catalytique d'oxyde de palladium.
